(19) Europäisches Patentamt
European Patent Office
Office européen des brevets

(11) **EP 4 478 357 A1**

(12) **EUROPEAN PATENT APPLICATION**

(43) Date of publication:
**18.12.2024 Bulletin 2024/51**

(21) Application number: **24201242.5**

(22) Date of filing: **23.04.2021**

(51) International Patent Classification (IPC):
**G10L 19/26** $^{(2013.01)}$ **G10L 25/51** $^{(2013.01)}$

(52) Cooperative Patent Classification (CPC):
**G10L 19/26; G10L 25/51;** Y02D 30/70

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2020 US 202063014917 P**

(62) Document number(s) of the earlier application(s) in
accordance with Art. 76 EPC:
**21721487.3 / 4 139 919**

(71) Applicant: **Telefonaktiebolaget LM Ericsson (publ)
164 83 Stockholm (SE)**

(72) Inventors:
• **Moradi Ashour, Chamran
112 62 Stockholm (SE)**
• **Norvell, Erik
194 44 Upplands Väsby (SE)**

(74) Representative: **Ericsson
Patent Development
Torshamnsgatan 21-23
164 80 Stockholm (SE)**

Remarks:
This application was filed on 19.09.2024 as a
divisional application to the application mentioned
under INID code 62.

(54) **LOW COST ADAPTATION OF BASS POST-FILTER**

(57) A method and a decoder for audio decoding, where an encoded signal is decoded to form a decoded signal, and an energy estimate of at least a part of a frequency spectrum of the decoded signal is obtained. A post-filter difference signal that describes the difference between a post-filtered decoded signal and a non-filtered decoded signal in time domain is generated, and size of discontinuities is measured by averaging the step at subframe boundaries of the post-filter difference signal. A decision variable is formed based on a ratio between average energy of the step at the subframe boundaries and the energy estimate. The decision variable is compared to a threshold and the output signal is set to be the decoded signal or the post-filtered signal as a result of the comparison.

**Figure 6**

**Description**

TECHNICAL FIELD

The present disclosure relates generally to communications, and more particularly to methods and apparatuses for mono, stereo or multi-channel audio encoding and decoding.

BACKGROUND

Although the capacity in telecommunication networks is continuously increasing, it is still of great interest to limit the required bandwidth per communication channel. In mobile networks smaller transmission bandwidths for each call yields lower power consumption in both the mobile device and the base station. This translates to energy and cost saving for the mobile operator, while the end user will experience prolonged battery life and increased talk-time. Further, with less consumed bandwidth per user, the mobile network can service a larger number of users in parallel.

In the field of speech coding, the ACELP (algebraic code-excited linear prediction) algorithm has been the leading technology in delivering high quality sound at low bit rates. In short, the ACELP model is composed of a linear predictor (LP) filter, which models the vocal tract and provides the coarse spectral shape of the reconstructed voice. The LP filter is driven by two codebooks: a pitch codebook (or adaptive codebook) which models the periodic component of the voice and an innovation codebook (or fixed codebook) which generates the non-periodic voice segments and also builds the pitch codebook. The core algorithm of the ACELP algorithm has been further enhanced, including post-processing tools such as post-filters. The two main such filters are the formant post-filter and the pitch-post filter, which both make use of parameters that are part of the ACELP speech model. The formant post-filter enhances the coarse spectral shape using the linear predictor filter (LP), and the pitch post-filter reduces inter-harmonic distortion by emphasizing the pitch period. A variant of the pitch post-filter, targeting the low frequency range, is the bass post-filter (BPF). This tool is present in recent speech codec standards, such as ITU-T G.718 and 3GPP EVS as illustrated in 3GPP TS 26.445 V16.0.0, Codec for Enhanced Voice Services (EVS); Detailed Algorithmic Description, 6.1.4.2 Bass post-filter [1].

Although the bass post-filter generally improves the quality of the decoded audio, it may have a negative impact on some signals. Several adaptation methods have been used to control the post-filter strength. In 3GPP EVS [1], the post-filter strength is adapted to how well the post-filtered signal correlates with the input signal. A low correlation suggests the filter may have a degrading impact, and as a result the filter output is attenuated. The post-filter strength is also adapted to the LP filter stability, where a low stability leads to an attenuated filter.

US 9,224,403 describes further adaptation methods of the bass post-filter. Here, US 9,224,403 has taken into consideration that the codec may use multiple modes, where the CELP or ACELP algorithm is one of these modes. Since the bass post-filter is only active for the ACELP mode, the strength of the bass post-filter may be adapted to avoid artefacts when enabling and disabling the filter in cases where there are frequent mode switches. U.S. patent 9,224,403 further considers how well the input signal is represented by the ACELP or CELP coding model. If there is significant energy loss, it is likely that the signal is not well modeled, and the bass post-filter may be harmful. To reduce the artefact from toggling the filter on and off, the post-filter strength may also be adapted gradually to give smoother transitions. The analysis of the filter impact may be done on a filter difference signal, describing the difference between the filtered and non-filtered signal. It may also be done on an approximate difference signal to reduce the computational complexity of the method.

In H. Chiba, et al "Adaptive Post-Filtering Controlled by Pitch Frequency for CELP-based Speech Coder", 2014 48th Asilomar Conference on Signals, Systems and Computers, it is recognized that the suitability of the bass post-filter may depend on the pitch, or fundamental frequency, of the signal. Here, the post-filter strength is limited as a function of the pitch, such that post-filter is attenuated for lower frequencies. The output of the filter is also low-pass filtered with a cut-off frequency that depends on the fundamental frequency, yielding lower operating bandwidth for lower fundamental frequencies.

SUMMARY

The post-filters are intended to reduce noise, but in some cases they may introduce new artefacts. In particular, abrupt changes in the parameters, such as a pitch period parameter or post-filter strength, may introduce discontinuities that become audible in the low energy regions of the spectrum.

Gradual activation and deactivation, as suggested by US 9224 403 B2, does not address the fact that discontinuities may happen internally in the filter as an effect of switching parameters. Experience shows that attempts to smoothen the transitions of the parameter switches may lead to a slower filter adaptation, which reduces the performance of the post-filter while the artefacts are still not fully removed.

In a first aspect there is provided a method for audio decoding, where an encoded signal is decoded to form a decoded signal, and an energy estimate of at least a part of a frequency spectrum of the decoded signal is obtained. A post-filter difference signal that describes the difference between a post-filtered decoded signal and a non-filtered decoded signal in time domain is generated, and size of discontinuities is measured by averaging the step at subframe boundaries of the post-filter difference signal. A decision variable is formed based on a ratio between average energy of the step at the subframe boundaries and the energy estimate. The decision variable is compared to a threshold and the output signal is set to be the decoded signal or the post-filtered signal as a result of the comparison.

In a second aspect there is provided a decoder adapted to obtain an energy estimate of at least a part of a frequency spectrum of the decoded signal and generate a post-filter difference signal that describes the difference between a post-filtered decoded signal and a non-filtered decoded signal in time domain. The decoder being adapted to measure size of discontinuities by averaging the step at subframe boundaries of the post-filter difference signal, to form a decision variable based on a ratio between average energy of the step at the subframe boundaries and the energy estimate, and to compare the decision variable to a threshold. The decoder being adapted to decide, as a result of the comparison, whether to set an output signal to be the decoded signal or the post-filtered signal.

In a third aspect there is provided a computer program, comprising instructions which, when executed on at least one processor, cause the at least one processor to carry out the method according to the first aspect.

One advantage that may be obtained using the inventive concepts described herein is the addition of an adaptation of a post-filter such that the benefits of the post-filter are maintained, while the problematic cases are mitigated by attenuating or disabling the post-filter. Further, this advantage achieved by a low complex method which has a limited impact on the overall computational complexity of the audio decoder.

BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:

Figure 1 is a diagram illustrating an example of a decoder system operating in a network according to some embodiments;

Figure 2 is a block diagram illustrating an example of a decoder with a pitch post-filter according to some embodiments;

Figure 3 is an illustration of discontinuities that may appear at the subframe boundaries in a pitch post-filter adjustment signal;

Figure 4 is an illustration of power spectra of a signal before and after applying the pitch post-filter called "bass post-filter (BPF)";

Figure 5 is a diagram illustrating a decoder with a pitch post-filter, where the decoder reconstructs the signal in frequency domain according to some embodiments;

Figure 6 is a block diagram of the elements of an adaptive post-filter according to some embodiments of inventive concepts;

Figure 7 is a block diagram illustrating elements of the adaptive post-filter according to some embodiments of inventive concepts;

Figure 8 is a flowchart illustrating operations performed by an adaptive post-filter according to some embodiments of inventive concepts;

Figure 9 is a block diagram illustrating the elements of an alternative adaptive post-filter according to some embodiments of inventive concepts;

Figure 10 is a block diagram illustrating a decoder according to some embodiments of inventive concepts;

Figure 11 is a flow chart illustrating operations of a decoder according to some embodiments of inventive concepts;

Figure 12 is a flow chart illustrating operations of a decoder according to some embodiments of inventive concepts;

Figure 13 is a flow chart illustrating operations of a decoder according to some embodiments of inventive concepts;

DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter.

For example, certain details of the described embodiments may be modified, omitted, or expanded upon without departing from the scope of the described subject matter.

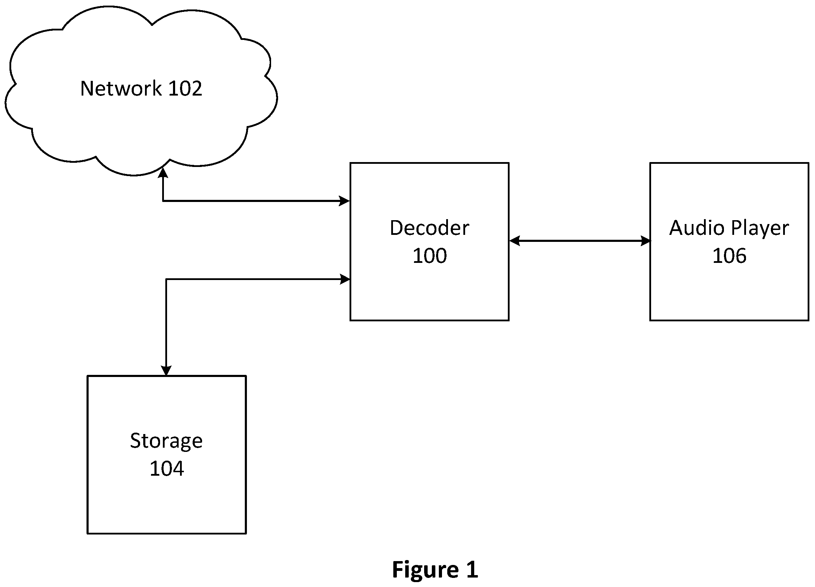

Figure 1 illustrates an example of an operating environment of a decoder 100 that may be used to decode mono, stereo or multi-channel bitstreams as described herein. The decoder 100 may be part of a media player, a mobile device, a set-top device, a desktop computer, and the like. The decoder 100 receives encoded bitstreams. The bitstreams may be sent from an encoder, from a storage device 104, from a device on the cloud via network 102, etc. During operation, decoder 100 receives and processes the frames of the bitstream as described herein. The decoder 100 outputs audio signals (e.g., mono, stereo or multi-channel audio signals) and transmits the audio signals to an audio player 106 having at least one loudspeaker for playback of mono, stereo or multi-channel audio signals. Storage device 104 may be part of a storage depository of mono, stereo or multi-channel audio signals such as a storage repository of a store or a streaming music service, a separate storage component, a component of a mobile device, etc. An audio player may be a Bluetooth speaker, a device having at least one loudspeaker, a mobile device, a streaming music service, etc.

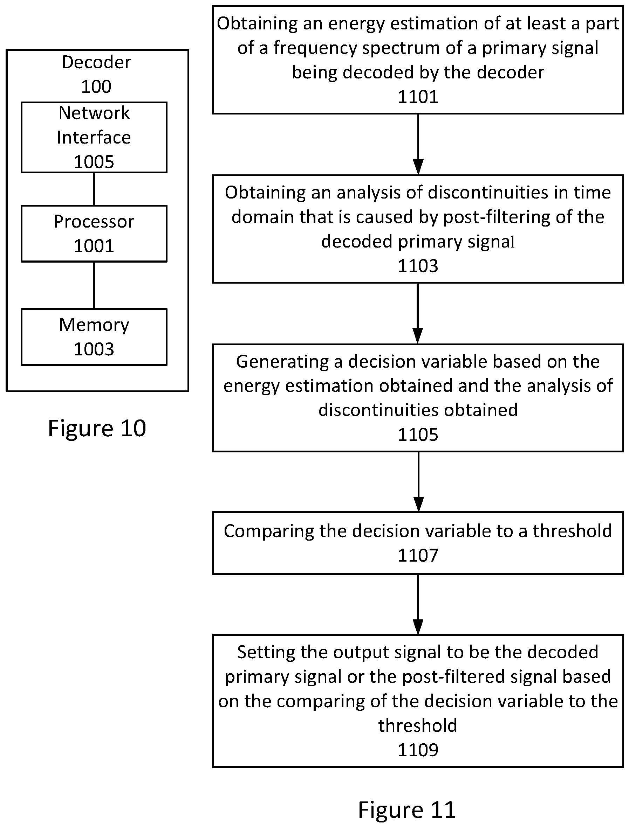

Figure 10 is a block diagram illustrating elements of a decoder device 100 configured to provide wireless communication according to embodiments of inventive concepts. A decoder 100 may be part of a mobile terminal, a mobile communication terminal, a wireless communication device, a wireless terminal, a wireless communication terminal, user equipment, UE, a user equipment node/terminal/device, etc. As shown, decoder 100 may include a network interface circuit 1005, also referred to as a network interface, configured to provide communications with other devices/entities/functions/etc. The decoder 100 may also include a processor circuit 1001, also referred to as a processor, operatively coupled to the network interface circuit 1005, and a memory circuit 1003, also referred to as memory, operatively coupled to the processor circuit. The memory circuit 1003 may include computer readable program code that when executed by the processor circuit 1001 causes the processor circuit to perform operations according to embodiments disclosed herein.

According to other embodiments, processor circuit 1001 may be defined to include memory so that a separate memory circuit is not required. As discussed herein, operations of the decoder 100 may be performed by processor 1001 and/or network interface 1005. For example, processor 1001 may control network interface 1005 to transmit communications to multi-channel audio players and/or to receive communications through network interface 1005 from one or more other network nodes/entities/servers such as encoder nodes, depository servers, etc. Moreover, modules may be stored in memory 1003, and these modules may provide instructions so that when instructions of a module are executed by processor 1001, processor 1001 performs respective operations.

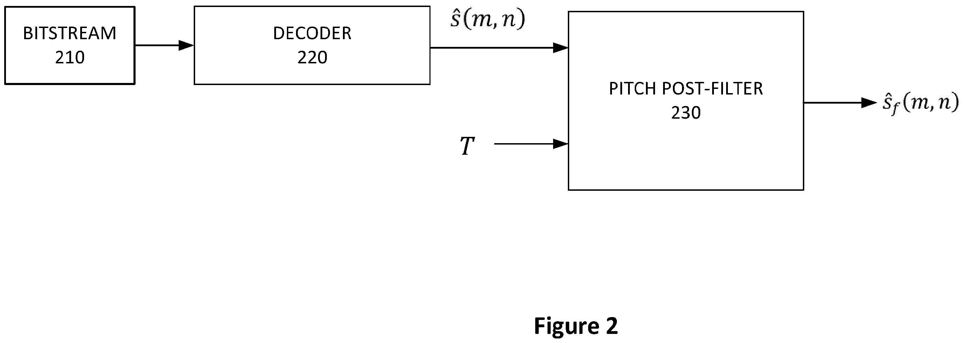

Figure 2 illustrates an audio decoding system including a pitch post-filter. The decoder 220 receives a bitstream 210 from e.g. a transmission network or a storage medium. The decoder generates a reconstructed time domain signal $\hat{s}(m, n)$ where $n$ is the sample index and $m$ is the frame number. The reconstructed time domain signal $\hat{s}(m, n)$ may also be referred to as a primary signal or a decoded primary signal in the description that follows. The reconstructed time domain signal $\hat{s}(m, n)$ is further enhanced by a pitch post-filter 230 which may also utilize a pitch period $T$.

The pitch period $T$ is obtained through pitch analysis done on the decoded audio, or it may come from an analysis in the encoder or decoder on the target signal or a related audio signal which may have the same or similar dominant pitch as the post-filter input signal.

The post-filtered signal $\hat{s}_f(m, n)$ may be derived using a pitch post-filter of the form:

$$\begin{cases} \hat{s}_f(m, n) = (1 - \alpha)\hat{s}(m, n) + \alpha s_p(m, n) \\ s_p(m, n) = 0.5\hat{s}(m, n - T) + 0.5\hat{s}(m, n + T) \end{cases}$$

where $T$ is the fundamental pitch period in samples and $\alpha \in [0, 0.5]$ controls the post-filter strength. An equivalent expression for the post-filtered signal is

$$\hat{s}_f(m, n) = \hat{s}(m, n) + \alpha \left( s_p(m, n) - \hat{s}(m, n) \right) =$$

$$\hat{s}(m, n) - \alpha \left( \hat{s}(m, n) - s_p(m, n) \right) = \hat{s}(m, n) - s_{diff}(m, n)$$

where $s_{diff}(m, n) = \alpha(\hat{s}(m, n) - s_p(m, n))$ is the impact of the filter expressed as a negative difference signal or a correction signal or an error signal. The parameters $\alpha$ and $T$ are typically updated each subframe, where a subframe may be 4 or 5 ms long. If the full audio frame is 20 ms, this means that the full frame is divided into 5 or 4 subframes respectively. In 3GPP EVS [1], the post-filter strength $\alpha$ is adapted based on the spectral stability of the signal. It also has a built-in failsafe mechanism by measuring the correlation with the post-filtered audio with the input signal. If the correlation is low, it means the filter is likely to have a negative impact on the quality and the filter is dampened or switched off.

The post-filtered signal $\hat{s}_f(m, n)$ is output from the decoder system to be played back by an audio player or potentially stored or transmitted in a decoded PCM format. Note that the decoder system may include further processing of the post-filtered signal before the final signal is output, such as additional enhancements or combinations with other signals or signal components. The reconstructed signal may in such cases correspond to a difference signal, or residual signal, as outlined in ITU-T G.718 "Frame error robust narrow-band and wideband embedded variable bit-rate coding of speech and audio from 8-32 kbit/s", section 7.14.1.2 Dual bass post-filter. The residual signal may be combined with another signal to provide an enhanced output signal.

## Bass post-filter adaptation - Embodiment A

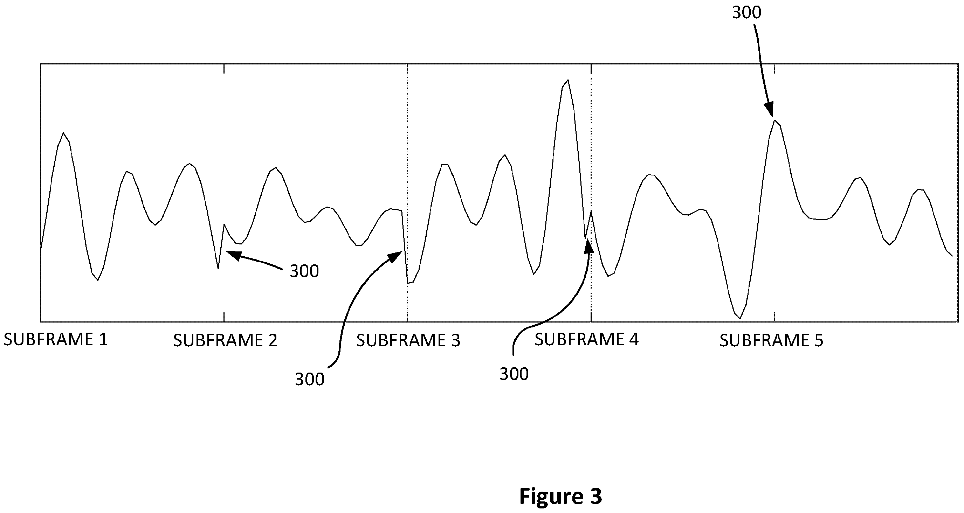

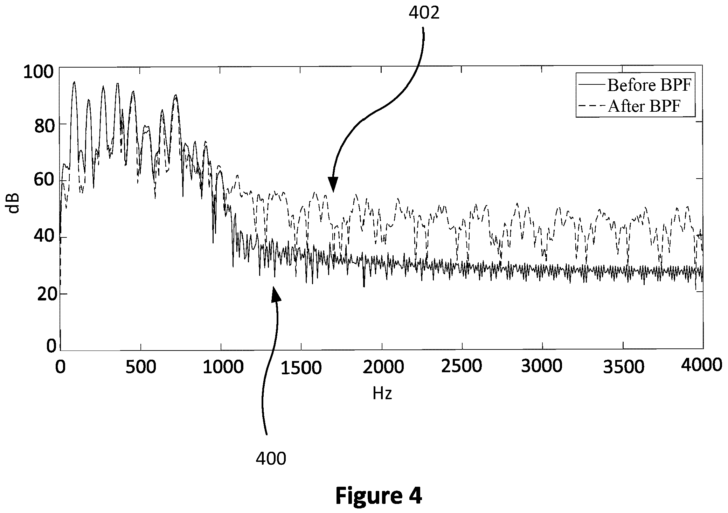

A drawback with the bass post-filter of Figure 2 is that the abrupt change of the bass post-filter parameters at the subframe boundary may cause undesired discontinuities in the filtered signal, as illustrated by the discontinuities 300 in Figure 3. These discontinuities may give distortions that spread across the frequency range. Depending on the spectrum of the input signal, these distortions may be noticeable and become disturbing. Consider e.g. the spectra 400 in Figure 4, where the post-filter operation generates audible noise 402 above approximately 1 kHz. Note that the filter still has the desired effect below 200 Hz, where the inter-harmonic distortion is reduced.

The failsafe mechanism of the filter, which measures the correlation of the filter output with the filter input signal, does not address the problem of the subframe transitions. Since the correlation is computed within each subframe, the transitions between subframes and their potential impact has not been considered.

A possible technique to reduce the effects of the discontinuities is to apply smoothing through low-pass filtering the parameters or by cross-fading the post-filter output between subframes. Although such operations were found to reduce the artefacts, the operations also slowed down the adaptation of the filter such that the positive effects of the filter were reduced. Further, even though the low-pass filtering of the parameters reduced the artefacts, switching the post-filter off for these critical segments was found to be better. Hence, it seems desirable to keep the post-filter untouched for the regions where it has a positive impact while it should be switched off completely when it has a negative impact. An adaptation of the post-filter which can anticipate the distortions and disable the filter whenever needed can reduce and, in some embodiments, eliminate the effects of discontinuities.

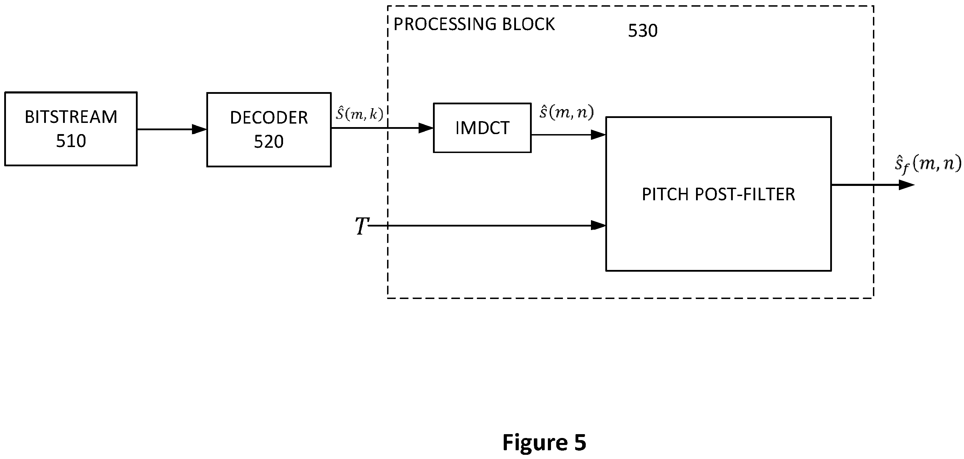

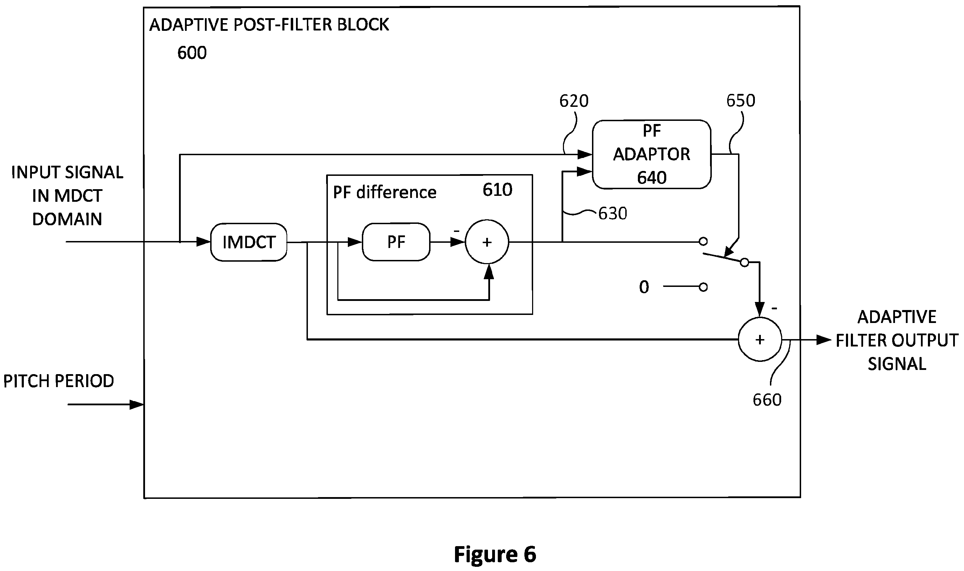

The decoder as outlined in Figure 5 provides such an adaptation. The decoder 520 receives a bitstream 510 and produces a reconstructed signal $\hat{S}(m, k)$ in frequency domain where $m$ is the frame number and $k$ is the frequency bin index. A transform which is often used in audio encoder and decoder systems is MDCT (modified discrete cosine transform). It should be noted that the concepts presented herein are applicable for any transform domain where energy calculations are possible, such as DFT (discrete Fourier transform), QMF (quadrature mirror filterbank) or a Hybrid QMF filterbank. The processing block 530 performs the inverse MDCT (IMDCT) transform and applies the post-filter. A post-filter adaptation method according to some embodiments of inventive concepts can be described by substituting the processing block 530 of Figure 5 with the adaptive post-filter block 600 of Figure 6. The reconstructed signal 620 in frequency domain $\hat{S}(m, k)$ is transformed to time domain. The resulting time domain signal is input to a post-filter difference generating block 610. The post-filter difference $s_{diff}(m, n)$ 630 and the reconstructed signal $\hat{S}(m, k)$ 620 in frequency domain are input to the post-filter adaptor 640, which forms a decision 650 whether or not the post-filter should be applied. The decision 650 is used to control the output 660 of the adaptive post-filter block by activating or deactivating subtraction of the post-filter difference from the reconstructed primary signal.

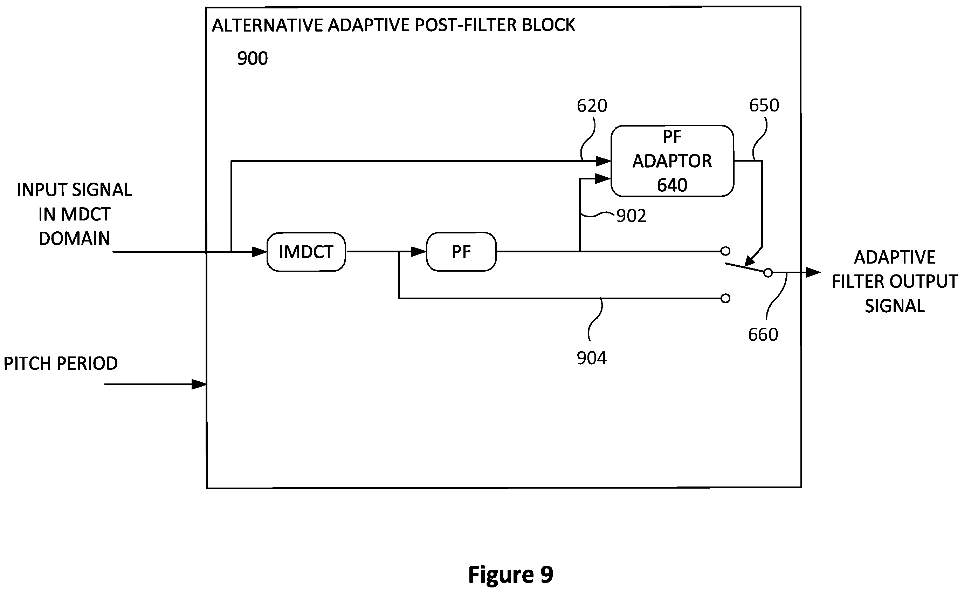

An alternative method, where the post-filter outputs the filtered signal rather than the filter difference signal is shown in Figure 9. Here, the decision mechanism of alternative adaptive post-filter block 900 decides whether to use the filtered signal 902 or the non-filtered signal 904. The time domain analysis of the filtered signal is performed on the filtered signal 902 instead of the difference signal, which will obtain similar results.

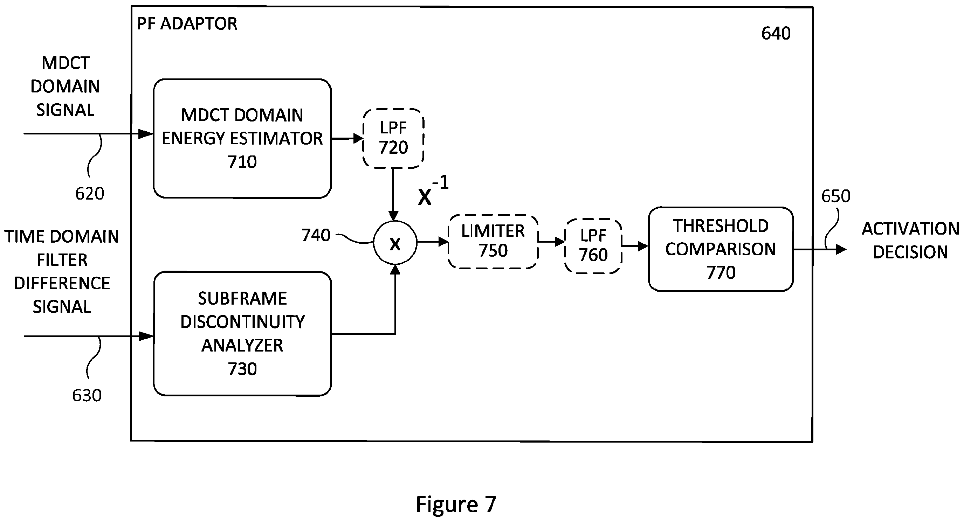

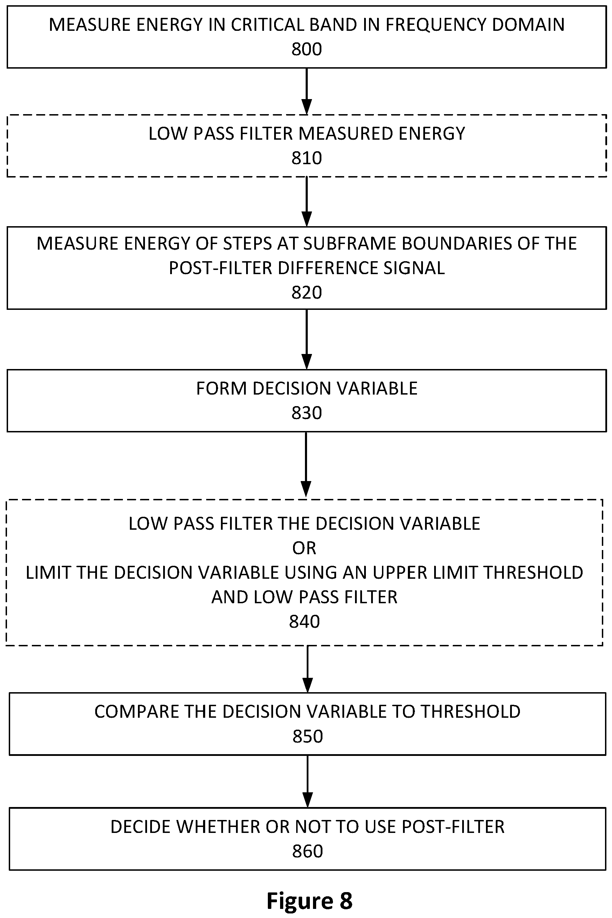

The post-filter adaptor 640 of Figure 6 can be further described by the elements of Figure 7 that perform the steps outlined in Figure 8. Based on the analysis of the problematic items as illustrated in Figure 3 and Figure 4, a post-filter adaptation method may be based on detecting two conditions:

1. The spectrum has a strong tilt or a deep valley which may expose the potential distortion of a post-filter as illustrated in Figure 4 where the signal 400 has a valley starting near 1000 Hz where the distortion 402 from the post filter is exposed, and

2. the discontinuities at the subframe boundaries are large as illustrated in Figure 3 by discontinuities 300.

Detecting a strong tilt or a deep valley in the spectrum may be done by measuring the energy of the spectrum in a certain critical band. A low energy in the critical band could then indicate that a deep valley is found in a perceptually sensitive part of the spectrum. The energy measurement $E_{\hat{S}_{cb}}(m)$ for each frame $m$ may be done on the reconstructed

signal $\hat{S}(m, k)$ in MDCT domain. The MDCT domain energy estimator 710 performs block 800 by measuring the energy of the critical band.

$$E_{\hat{S}_{cb}}(m) = \frac{1}{k_{end} - k_{start} + 1} \sum_{k=k_{start}}^{k_{end}} \left( \hat{S}(m, k) \right)^2$$

The frequency bin limits $k_{start}$ and $k_{end}$ can be set to match the frequency range of the critical band. For example, if the MDCT frame length $N_{MDCT}$ = 160, the sampling rate is 8000 Hz and the critical frequency range is 1000 Hz - 1600 Hz, suitable values may be $k_{start}$ = 39 and $k_{end}$ = 64. For a strictly high-pass filtering operation, the upper limit should be 4000 Hz and $k_{end}$ = 160. In the description above, the critical band may be adaptive and e.g. depend on the reconstructed signal. The critical band could for instance be focused around an identified low energy region measured on a perceptual weighted spectrum. A perceptually weighted spectrum can be generated based on the spectrum of the reconstructed signal and transformed in frequency and level dimensions such that perceptually important regions are emphasized. An adaptive critical band can also take into consideration for which frequency range the post-filter may generate distortion.

Since the MDCT synthesis of $\hat{S}(m, k)$ may involve an overlap-add operation, it may be desirable to mimic the overlap-add in the energy estimation. This may be done by applying a low-pass FIR filter 720 in block 810 to the energy estimate:

$$\tilde{E}_{\hat{S}_{cb}}(m) = \gamma E_{\hat{S}_{cb}}(m) + (1 - \gamma)E_{\hat{S}_{cb}}(m - 1).$$

Here $\gamma \in (0,1]$ is a low-pass filtering coefficient which e.g. depends on the shape of the MDCT synthesis windows and the length of the overlap. A suitable value may be $\gamma$ = 0.61.

The size of the discontinuities is measured by averaging the step at the subframe boundaries of the filter difference signal $s_{diff}(m, n)$ in block 820 using the subframe discontinuity analyzer 730:

$$\tilde{E}_{step}(m) = \frac{1}{N_{sf}} \sum_{i=1}^{N_{sf}} \left( s_{diff}(m, n_i) - s_{diff}(m, n_i - 1) \right)^2$$

Where $m$ denotes the frame number, $i$ is the subframe number, $N_{sf}$ is the number of subframes and $n_1, n_2, ... , n_{N_{sf}}$ is the sample indices of the subframe boundaries marking the start of each new subframe. If the number of subframes $N_{sf}$ = 5 and the frame length $N$ = 160, the subframe boundary indices may be $n_1$ = 0, $n_2$ = 32, $n_3$ = 64, $n_4$ = 96, $n_5$ = 128. Note that for the first sample $n_1$ = 0, sample $s_{diff}(m, -1)$ would be referenced. However, this is the same sample as the last sample of the previous frame, $s_{diff}(m - 1, N - 1)$. In a practical implementation, this sample value would be stored in memory between frames.

A decision variable is formed at block 830 at multiplier 740 as the ratio between $\tilde{E}_{step}(m)$ and $\tilde{E}_{\hat{S}_{cb}}(m)$.

$$\tilde{E}_{ratio}(m) = \frac{\tilde{E}_{step}(m)}{\tilde{E}_{\hat{S}_{cb}}(m)}$$

Alternatively, in case the optional low-pass filtering step 810 is omitted, a decision variable is formed as the ratio between $\tilde{E}_{step}(m)$ and $E_{\hat{S}_{cb}}(m)$, where $E_{\hat{S}_{cb}}(m)$ is the energy estimate calculated in block 800.

To stabilize the decision, the $\tilde{E}_{ratio}(m)$ may be low-pass filtered by applying a low-pass filter 760 at block 840 between frames, e.g.

$$\tilde{E}_{ratio,LP}(m) = \beta \tilde{E}_{ratio}(m) + (1 - \beta)\tilde{E}_{ratio,LP}(m - 1)$$

where $\beta \in (0,1]$ is a low-pass filtering coefficient and a suitable value may be $\beta$ = 0.68.

It may further be beneficial to limit the range of the low-pass filtered energy ratio in block 840 via limiter 750, in which case the expression may be written

$$\tilde{E}_{ratio,LP}(m) = \beta \tilde{E}_{ratio,1}(m) + (1-\beta)\tilde{E}_{ratio,LP}(m-1)$$

$$\tilde{E}_{ratio,1}(m) = \begin{cases} \tilde{E}_{ratio}(m), & \tilde{E}_{ratio}(m) \le E_{ratio,lim} \\ E_{ratio,lim}, & \tilde{E}_{ratio}(m) > E_{ratio,lim} \end{cases}$$

where $E_{ratio,lim}$ would set an upper limit for the energy ratio and where a suitable value was found to be $E_{ratio,lim} = 2$. Note that when $\beta$ is 1, the energy ratio is no longer low-pass filtered.

The post-filter activation decision in various embodiments is taken by comparing the low-pass filtered energy ratio with the threshold at threshold comparator 770 in block 850 and determining whether or not to use (e.g., activate) the post-filter in block 860. In one embodiment of inventive concepts, the threshold $E_{thr}$ is set to 1.

$$D(m) = \begin{cases} active, & \tilde{E}_{ratio,LP}(m) < E_{thr} \\ inactive, & \tilde{E}_{ratio,LP}(m) \ge E_{thr} \end{cases}$$

where *active* indicates the post-filter is activated and *inactive* indicates the post-filter is disabled. It should be noted that if the optional block 840 is omitted, the decision variable $\tilde{E}_{ratio}(m)$, calculated in block 830, is compared with the threshold. As indicated above, when the post-filter is activated, the output of the post-filter subtracts the post-filter difference from the reconstructed primary signal. When the post-filter is inactive, the output of the post-filter is the reconstructed primary signal.

Note that a similar analysis of the discontinuities may be done on the filter output signal $s_f(m, n)$ instead of the difference signal $s_{diff}(m, n)$, as illustrated in Figure 9. This would likely lead to different choices on e.g. the filter constants $\beta$, $y$, $E_{ratio,lim}$ and $E_{thr}$, but the principles of the concepts described above would remain the same.

In some embodiments adding some hysteresis for the switching to reduce toggling may be useful if the low-pass filtered energy ratio is hovering around the threshold. One way to implement hysteresis is to have two thresholds: one for activation and one for deactivation. If the activation threshold is a bit higher than the deactivation threshold this creates a "dead zone" for the decision variable and reduces toggling if the variable is hovering around the threshold. Another way to implement hysteresis is to determine a count of the number of times the low-pass filtered energy ratio goes below (or alternatively, above) the threshold in a time period and activate (or deactivate) the post-filter after a predetermined number of times the low-pass filtered energy ratio goes below (or alternatively, above) the threshold in the time period.

In the embodiments described above, a critical band is used. In various other embodiments of inventive concepts, more than one critical band, corresponding to more than one spectral valley may be present. In one embodiment, the critical band selected to analyze is the most sensitive region and the decision whether or not to use the post-filter is performed for the selected critical band. In other embodiments, there could be multiple regions where the noise is just below the threshold for being noticeable, and combining many of these regions may result in a user hearing the noise while the analysis per region indicates the noise should not be noticeable. One way to account for this may be summing the contribution from several critical bands and deciding whether to set the output to be the primary signal or the post-filtered signal based on the embodiments described above. An alternative approach is to analyze the bands separately, and then disable the post-filter if the threshold is triggered for any one of the bands being analyzed.

**Embodiment B**

An alternative method for deciding if the noise will be masked is to compare the energy of the signal in the critical region before and after the post-filter. This alternative method was found to give similar results as the inventive concepts described under Embodiment A, but at the cost of higher delay and complexity. The energy of critical band of the reconstructed signal can be measured in time domain:

$$E_{\hat{s}_{cb}}(m) = \frac{1}{N}\sum_{n=0}^{N-1}\hat{s}_{cb}(m,n)^2$$

$$\hat{s}_{cb}(m,n) = f_{cb}\big(\hat{s}(m,n)\big)$$

where $f_{cb}(\cdot)$ is a high-pass filter or a band-pass filter matching the critical band. Similarly, the energy of the critical band of the post-filtered reconstructed signal can be written

$$E_{s_f}(m) = \frac{1}{N} \sum_{n=0}^{N-1} s_{f,cb}(m,n)^2$$

$$s_{f,cb}(m,n) = f_{cb}\left(s_f(m,n)\right)$$

A decision $D(m)$ to activate or disable the post-filter for frame $m$ can be formed by comparing the energy ratio of the critical band of the signals before and after applying the post-filter to a decision threshold $E_{thr}$ as illustrated below where active indicates the post-filter is activated and inactive indicates the post-filter is disabled. In one embodiment of inventive concepts, the threshold $E_{thr}$ is set to 1. In other words, when the energy above a certain cut-off frequency is higher after applying the post-filter, the energy increase is assumed to be caused by noise and the post-filter is disabled.

$$D(m) = \begin{cases} active, & \dfrac{E_{s_f}(m)}{E_{\hat{s}_{cb}}(m)} < E_{thr} \\[2mm] inactive, & \dfrac{E_{s_f}(m)}{E_{\hat{s}_{cb}}(m)} \geq E_{thr} \end{cases}$$

Disabling the post-filter for frame $m$ can be implemented in some embodiments by using the decoded signal $\hat{s}(m, n)$ instead of the post-filtered version $s_f(m, n)$. If the filter routine produces a filter difference signal $s_{diff}(m, n)$, the disabling of the filter can be implemented by skipping the subtraction of the filter difference signal from the decoded signal $\hat{s}(m, n)$.

In some embodiments it may be useful to add some hysteresis for the switching between the primary signal and the post-filtered signal to reduce toggling if the energy ratio is hovering around the threshold. One way to implement hysteresis is to have two thresholds: one for activation and one for deactivation. If the activation threshold is a bit higher than the deactivation threshold this creates a "dead zone" for the decision variable and reduces toggling if the variable is hovering around the threshold. Another way to implement hysteresis is to determine a count of the number of times the low-pass filtered energy ratio goes below (or alternatively, above) the threshold in a time period and activate (or deactivate) the post-filter after a predetermined number of times the low-pass filtered energy ratio goes below (or alternatively, above) the threshold in the time period.

Operations of the decoder 100 (implemented using the structure of the block diagram of Figure 10) will now be discussed with reference to the flow chart of Figure 11 according to some embodiments of inventive concepts. For example, modules may be stored in memory 1003 of Figure 3, and these modules may provide instructions so that when the instructions of a module are executed by respective communication device processing circuitry 1001, processing circuitry 1001 performs respective operations of the flow chart.

Turning now to Figure 11, in block 1101, the processing circuitry 1001 obtains an energy estimation of at least a part of a frequency spectrum of the primary signal being reconstructed, i.e., decoded, by the decoder 100. The primary signal reconstruction may be done in the frequency domain. The operations of block 1101 are analogous to the operations of block 800 described above. In various embodiments of inventive concepts, the processing circuitry 1001 may obtain the energy estimation by summing energy coefficients of the at least a part of the frequency spectrum in the frequency domain. For example, in some embodiments, the processing circuitry 1001 obtains the energy estimation by measuring an energy of a critical band of a reconstructed signal in accordance with

$$E_{\hat{s}_{cb}}(m) = \frac{1}{k_{end} - k_{start} + 1} \sum_{k=k_{start}}^{k_{end}} \left(\hat{S}(m,k)\right)^2$$

wherein $m$ is a frame number, $E_{\hat{s}_{cb}}(m)$ is an energy of a critical band of the reconstructed signal, $\hat{S}(m, k)$ is a reconstructed signal, and frequency bin limits $k_{start}$ and $k_{end}$ are set to match a frequency range of critical band.

The processing circuitry 1001 may further process the measurement by applying a low-pass filter to the energy $E_{\hat{s}_{cb}}(m)$ of the critical band of the reconstructed signal in accordance with

$$\tilde{E}_{\hat{S}_{cb}}(m) = \gamma E_{\hat{S}_{cb}}(m) + (1 - \gamma)E_{\hat{S}_{cb}}(m - 1)$$

wherein $\gamma \in (0,1]$ and is a low-pass filtering coefficient which depends on a shape of modified discrete cosine transform, MDCT, synthesis windows and a length of an overlap.

In block 1103, the processing circuitry 1001 obtains an analysis of discontinuities in time domain that is caused by post-filtering of the primary signal. The operations of block 1103 are analogous to the operations of block 820 described above. In various embodiments of inventive concepts, the processing circuitry 1001 may obtain the analysis of the discontinuities in time domain by measuring an average energy of a size of the discontinuities. For example, in some embodiments, the processing circuitry 1001 measures the average energy of the size of the discontinuities by averaging a step at subframe boundaries of a filter difference signal $s_{diff}(m, n)$ in accordance with

$$\tilde{E}_{step}(m) = \frac{1}{N_{sf}} \sum_{i=1}^{N_{sf}} \left( s_{diff}(m, n_i) - s_{diff}(m, n_i - 1) \right)^2$$

wherein $m$ is a frame number, $i$ is a subframe number, $\tilde{E}_{step}(m)$ is an average energy of the step at the subframe boundaries, $N_{sf}$ is a number of subframes and $n_1, n_2, ..., n_{N_{sf}}$ are sample indices of the subframe boundaries marking the start of each subframe.

In block 1105, the processing circuitry 1001 generates a decision variable based on the energy estimation obtained and the analysis of discontinuities obtained. The operations of block 1105 are analogous to the operations of block 830 described above. In various embodiments of inventive concepts, the processing circuitry 1001 may generate the decision variable in accordance with

$$\tilde{E}_{ratio}(m) = \frac{\tilde{E}_{step}(m)}{\tilde{E}_{\hat{S}_{cb}}(m)}$$

wherein $\tilde{E}_{ratio}(m)$ is an energy ratio between $\tilde{E}_{step}(m)$ and $\tilde{E}_{\hat{S}_{cb}}(m)$, $\tilde{E}_{step}(m)$ is an average energy of a step at subframe boundaries, $\tilde{E}_{\hat{S}_{cb}}(m)$ is a low-pass filtered energy $E_{\hat{S}_{cb}}(m)$ of a critical band of a reconstructed signal.

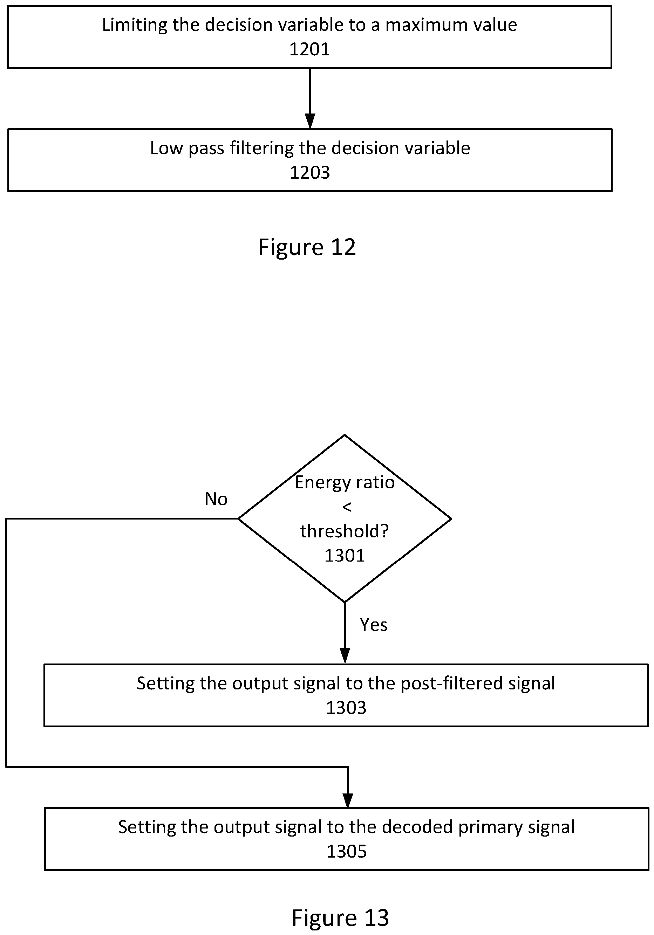

Turning to Figure 12, in some embodiments of inventive concepts, the processing circuitry 1001 may limit the decision variable to a maximum value in block 1201 and low pass filter the decision variable in block 1203. The operations of blocks 1201 and 1203 are analogous to the operations of block 840 described above. In some embodiments, the processing circuitry 1001 limits the decision variable and low pass filters the decision variable in accordance with

$$\tilde{E}_{ratio}(m) = \frac{\tilde{E}_{step}(m)}{\tilde{E}_{\hat{S}_{cb}}(m)}$$

$$\tilde{E}_{ratio,LP}(m) = \beta \tilde{E}_{ratio,1}(m) + (1 - \beta)\tilde{E}_{ratio,LP}(m - 1)$$

$$\tilde{E}_{ratio,1}(m) = \begin{cases} \tilde{E}_{ratio}(m), & \tilde{E}_{ratio}(m) \leq E_{ratio,lim} \\ E_{ratio,lim}, & \tilde{E}_{ratio}(m) > E_{ratio,lim} \end{cases}$$

wherein $m$ is a frame number, $\tilde{E}_{ratio}(m)$ is an energy ratio between $\tilde{E}_{step}(m)$ and $\tilde{E}_{\hat{S}_{cb}}(m)$, $\tilde{E}_{step}(m)$ is an average energy of a step at subframe boundaries, $\tilde{E}_{\hat{S}_{cb}}(m)$ is a low-pass filtered energy $E_{\hat{S}_{cb}}(m)$ of a critical band of a reconstructed signal, $\beta \in (0,1]$ is a low-pass filtering coefficient, and $E_{ratio,lim}$ is an upper limit for the energy ratio.

Returning to Figure 11, in block 1107, the processing circuitry 1001 compares the decision variable to a threshold. For example, as described above, when the decision variable is the energy ratio between $\tilde{E}_{step}(m)$ and $\tilde{E}_{\hat{S}_{cb}}(m)$, the energy ratio is compared to a threshold $E_{thr}$.

In block 1109, the processing circuitry 1001 sets an output signal of the decoder 100 to the decoded primary signal or the post-filtered signal (formed by the post-filtering) based on the comparing of the decision variable to the threshold. For example, as described above, in some embodiments, the processing circuitry 1001 compares the decision variable in accordance with

$$D(m) = \begin{cases} active, & \dfrac{E_{S_f}(m)}{E_{\hat{S}_{cb}}(m)} < E_{thr} \\ inactive, & \dfrac{E_{S_f}(m)}{E_{\hat{S}_{cb}}(m)} \geq E_{thr} \end{cases}$$

In various embodiments of inventive concepts, the threshold energy $E_{thr}$ can be set to be a value of 1.

An example of setting the output signal is illustrated in Figure 13. Turning to Figure 13, the processing circuitry 1001 in block 1301 compares the energy ratio between an average energy of a step at subframe boundaries and an energy estimation of the at least a part of the frequency spectrum of the primary signal to a threshold.

In block 1303, responsive to the energy ratio between the average energy of the step at subframe boundaries and the energy estimation of the at least a part of the frequency spectrum of the primary signal being less than a threshold, the processing circuitry 1001 sets the output signal to be the post-filtered signal.

In block 1305, responsive to the energy ratio between the average energy of the step at subframe boundaries and the energy of the at least a part of the frequency spectrum of the primary signal being equal to the threshold or higher than the threshold, the processing circuitry 1001 sets the output signal to be the decoded primary signal.

In some embodiments of inventive concepts, hysteresis can be added for setting the output between the decoded primary signal and the post-filtered signal to reduce toggling if the energy ratio is hovering around the threshold.

Example embodiments are discussed below.

Embodiment 1. A method for audio decoding, where an encoded primary signal is decoded to form a decoded primary signal, followed by a post-filtering of the decoded primary signal to form a post-filtered signal, where an output signal of the decoder is one of the decoded primary signal and a post-filtered signal, the method comprising: obtaining (1101, 800) an energy estimation of at least a part of a frequency spectrum of the primary signal being reconstructed by the decoder; obtaining (1103, 820) an analysis of discontinuities in time domain that is caused by the post-filtering of the decoded primary signal; generating (1105, 830) a decision variable based on the energy estimation obtained and the analysis of discontinuities obtained; comparing (1107, 850) the decision variable to a threshold; and setting (1109) the output signal to be the decoded primary signal or the post-filtered signal based on the comparing of the decision variable to the threshold.

Embodiment 2. The method of Embodiment 1 wherein the primary signal reconstruction is done in frequency domain.

Embodiment 3. The method of Embodiment 2 wherein obtaining the energy estimation comprises summing energy coefficients of the at least a part of the frequency spectrum in the frequency domain.

Embodiment 4. The method of Embodiment 3 wherein obtaining the energy estimation comprises measuring an energy of a critical band of a reconstructed signal in accordance with

$$E_{\hat{S}_{cb}}(m) = \frac{1}{k_{end} - k_{start} + 1} \sum_{k=k_{start}}^{k_{end}} \left( \hat{S}(m,k) \right)^2$$

wherein $m$ is a frame number, $E_{\hat{S}_{cb}}(m)$ is an energy of a critical band of a reconstructed signal, $\hat{S}(m, k)$ is a reconstructed signal, and frequency bin limits $k_{start}$ and $k_{end}$ are set to match a frequency range of a critical band.

Embodiment 5. The method of Embodiment 4, further comprising applying a low-pass filter to the energy $E_{\hat{S}_{cb}}(m)$ of the critical band of the reconstructed signal in accordance with

$$\tilde{E}_{\hat{S}_{cb}}(m) = \gamma E_{\hat{S}_{cb}}(m) + (1 - \gamma) E_{\hat{S}_{cb}}(m - 1)$$

wherein $\gamma \in (0,1]$ and is a low-pass filtering coefficient which depends on a shape of modified discrete cosine transform, MDCT, synthesis windows and a length of an overlap.

Embodiment 6. The method of any of Embodiments 1-5 wherein obtaining the analysis of the discontinuities in time domain comprises measuring an average energy of a size of the discontinuities.

Embodiment 7. The method of Embodiment 6 wherein measuring the average energy of the size of the discontinuities comprises averaging a step at subframe boundaries of a filter difference signal $s_{diff}(m, n)$ in accordance with

$$\tilde{E}_{step}(m) = \frac{1}{N_{sf}} \sum_{i=1}^{N_{sf}} \left( s_{diff}(m, n_i) - s_{diff}(m, n_i - 1) \right)^2$$

wherein $m$ is a frame number, $i$ is a subframe number, $\tilde{E}_{step}(m)$ is an average energy of the step at the subframe boundaries, $N_{sf}$ is a number of subframes and $n_1$, $n_2$, ..., $n_{Nsf}$ are sample indices of the subframe boundaries marking the start of each subframe.

Embodiment 8. The method of any of Embodiments 1-7 wherein generating the decision variable comprises limiting (1201, 840) the decision variable to a maximum value.

Embodiment 9. The method of any of Embodiments 1-8 further comprising low-pass filtering (1203, 840) the decision variable.

Embodiment 10. The method of Embodiment 9 wherein generating the decision variable comprises generating the decision variable $\tilde{E}_{ratio,LP}(m)$ in accordance with

$$\tilde{E}_{ratio}(m) = \frac{\tilde{E}_{step}(m)}{\tilde{E}_{\hat{S}_{cb}}(m)}$$

$$\tilde{E}_{ratio,LP}(m) = \beta \tilde{E}_{ratio,1}(m) + (1 - \beta)\tilde{E}_{ratio,LP}(m - 1)$$

$$\tilde{E}_{ratio,1}(m) = \begin{cases} \tilde{E}_{ratio}(m), & \tilde{E}_{ratio}(m) \le E_{ratio,lim} \\ E_{ratio,lim}, & \tilde{E}_{ratio}(m) > E_{ratio,lim} \end{cases}$$

wherein $m$ is a frame number, $\tilde{E}_{ratio}(m)$ is an energy ratio between $\tilde{E}_{step}(m)$ and $\tilde{E}_{\hat{S}_{cb}}(m)$, $\tilde{E}_{step}(m)$ is an average energy of a step at subframe boundaries, $\tilde{E}_{\hat{S}_{cb}}(m)$ is a low-pass filtered energy $E_{\hat{S}_{cb}}(m)$ of a critical band of a reconstructed signal, $\beta \in (0,1]$ is a low-pass filtering coefficient, and $E_{ratio,lim}$ is an upper limit for the energy ratio.

Embodiment 11. The method of any of Embodiments 1-10, wherein setting the output signal to be the decoded primary signal or the post-filtered signal based on the comparing of the decision variable to the threshold comprises: responsive to an energy ratio between an average energy of a step at subframe boundaries and an energy estimation of the at least a part of the frequency spectrum of the primary signal being less than a threshold (1301), setting (1303) the output signal to the post-filtered signal; and responsive to the energy ratio between the average energy of the step at subframe boundaries and the energy of the at least a part of the frequency spectrum of the primary signal being equal to the threshold or higher than the threshold (1301), setting (1305) the output signal to the decoded primary signal.

Embodiment 12. The method of Embodiment 11, further comprising: providing hysteresis for the comparing of the decision variable to the threshold to prevent the output signal from being set back and forth between the primary signal and the post-filtered signal when the energy ratio goes above and below the threshold level in a specified period of time.

Embodiment 13. A decoder (100) for audio decoding, where a primary signal is decoded to form a decoded primary signal, followed by a post-filtering of the decoded primary signal to form a post-filtered signal, where an output signal of the decoder is one of the decoded primary signal and a post-filtered signal, the decoder comprising: processing circuitry

(1001); and memory (1003) coupled with the processing circuitry, wherein the memory includes instructions that when executed by the processing circuitry causes the decoder to perform operations comprising: obtaining (1101, 800) an energy estimation of at least a part of a frequency spectrum of the primary signal being reconstructed by the decoder; obtaining (1103, 820) an analysis of discontinuities in time domain that is caused by the post-filtering of the decoded primary signal; generating (1105, 830) a decision variable based on the energy estimation obtained and the analysis of discontinuities obtained; comparing (1107, 850) the decision variable to a threshold; and setting (1109) the output signal to be the decoded primary signal or the post-filtered signal based on the comparing of the decision variable to the threshold.

Embodiment 14. The decoder of Embodiment 13 wherein a primary signal reconstruction is done in frequency domain.

Embodiment 15. The decoder of Embodiment 14 wherein in obtaining the energy estimation, the memory includes further instructions that when executed by the processing circuitry causes the decoder to perform operations comprising summing energy coefficients of the at least a part of the frequency spectrum in the frequency domain.

Embodiment 16. The decoder of Embodiment 15 wherein in obtaining the energy estimation, the memory includes further instructions that when executed by the processing circuitry causes the decoder to perform operations comprising measuring an energy of a critical band of a reconstructed signal in accordance with

$$E_{\hat{S}_{cb}}(m) = \frac{1}{k_{end} - k_{start} + 1} \sum_{k=k_{start}}^{k_{end}} \left( \hat{S}(m,k) \right)^2$$

wherein $m$ is a frame number, $\tilde{E}_{\hat{S}_{cb}}(m)$ is the energy of the critical band of the reconstructed signal, $\hat{S}(m, k)$ is a reconstructed signal, and frequency bin limits $k_{start}$ and $k_{end}$ are set to match a frequency range of the critical band.

Embodiment 17. The decoder of Embodiment 16, wherein the memory includes further instructions that when executed by the processing circuitry causes the decoder to perform further operations comprising applying a low-pass filter to the energy $E_{\hat{S}_{cb}}(m)$ of the critical band of the reconstructed signal in accordance with

$$\tilde{E}_{\hat{S}_{cb}}(m) = \gamma E_{\hat{S}_{cb}}(m) + (1 - \gamma) E_{\hat{S}_{cb}}(m - 1)$$

wherein $\gamma \in (0,1]$ and is a low-pass filtering coefficient which depends on a shape of modified discrete cosine transform, MDCT, synthesis windows and a length of an overlap.

Embodiment 18. The decoder of any of Embodiments 13-17 wherein in obtaining the analysis of the discontinuities in time domain, the memory includes further instructions that when executed by the processing circuitry causes the decoder to perform operations comprising measuring an average energy of a size of the discontinuities.

Embodiment 19. The decoder of any of Embodiments 13-18 wherein in measuring the average energy of the size of the discontinuities, the memory includes further instructions that when executed by the processing circuitry causes the decoder to perform operations comprising averaging a step at subframe boundaries of a filter difference signal $s_{diff}(m, n)$ in accordance with

$$\tilde{E}_{step}(m) = \frac{1}{N_{sf}} \sum_{i=1}^{N_{sf}} \left( s_{diff}(m, n_i) - s_{diff}(m, n_i - 1) \right)^2$$

wherein $m$ is a frame number, $i$ is a subframe number, $\tilde{E}_{step}(m)$ is an average energy of the step at the subframe boundaries, $N_{sf}$ is a number of subframes and $n_1, n_2, ..., n_{N_{sf}}$ are sample indices of the subframe boundaries marking the start of each subframe.

Embodiment 20. The decoder of any of Embodiments 13-19 wherein in generating the decision variable, the memory includes further instructions that when executed by the processing circuitry causes the decoder to perform operations comprising limiting (1201, 840) the decision variable to a maximum value.

Embodiment 21. The decoder of any of Embodiments 13-20 wherein the memory includes further instructions that when executed by the processing circuitry causes the decoder to perform operations comprising low-pass filtering (1203, 840) the decision variable.

Embodiment 22. The decoder of Embodiment 21 wherein in generating the decision variable, the memory includes further instructions that when executed by the processing circuitry causes the decoder to perform operations comprising generating the decision variable $\tilde{E}_{ratio,LP}(m)$ in accordance with

$$\tilde{E}_{ratio}(m) = \frac{\tilde{E}_{step}(m)}{\tilde{E}_{\hat{S}_{cb}}(m)}$$

$$\tilde{E}_{ratio,LP}(m) = \beta \tilde{E}_{ratio,1}(m) + (1 - \beta) \tilde{E}_{ratio,LP}(m - 1)$$

$$\tilde{E}_{ratio,1}(m) = \begin{cases} \tilde{E}_{ratio}(m), & \tilde{E}_{ratio}(m) \le E_{ratio,lim} \\ E_{ratio,lim}, & \tilde{E}_{ratio}(m) > E_{ratio,lim} \end{cases}$$

wherein $m$ is a frame number, $\tilde{E}_{ratio}(m)$ is an energy ratio between $\tilde{E}_{step}(m)$ and $\tilde{E}_{\hat{S}_{cb}}(m)$, $\tilde{E}_{step}(m)$ is an average energy of a step at subframe boundaries, $\tilde{E}_{\hat{S}cb}(m)$ is a low-pass filtered energy $E_{\hat{S}cb}(m)$ of the critical band of the reconstructed signal, $\beta \in (0,1]$ is a low-pass filtering coefficient, and $E_{ratio,lim}$ is an upper limit for the energy ratio.

Embodiment 23. The decoder of any of Embodiments 13-22, wherein in setting the output signal to be the primary signal or the post-filtered signal based on the comparing of the decision variable to the threshold, the memory includes further instructions that when executed by the processing circuitry causes the decoder to perform operations comprising: responsive to an energy ratio between an average energy of a step at subframe boundaries and an energy estimation of the at least a part of the frequency spectrum of the primary signal being less than a threshold (1301), setting (1303) the output signal to the post-filtered signal; and responsive to the energy ratio between the average energy of the step at subframe boundaries and the energy of the at least a part of the frequency spectrum of the primary signal being equal to the threshold or higher than the threshold (1301), setting (1305) the output signal to the decoded primary signal.

Embodiment 24. The decoder of Embodiment 23, wherein the memory includes further instructions that when executed by the processing circuitry causes the decoder to perform further operations comprising: providing hysteresis for the comparing of the decision variable to the threshold to prevent the output signal from being set back and forth between the primary signal and the post-filtered signal when the energy ratio goes above and below the threshold level in a specified period of time.

Embodiment 25. A decoder (100) adapted to perform operations comprising: obtaining (1101, 800) an energy estimation of at least a part of a frequency spectrum of a primary signal being reconstructed by the decoder to form a decoded primary signal; obtaining (1103, 820) an analysis of discontinuities in time domain that is caused by post-filtering of the decoded primary signal; generating (1105, 830) a decision variable based on the energy estimation obtained and the analysis of discontinuities obtained; comparing (1107, 850) the decision variable to a threshold; and setting (1109) the output signal to be the decoded primary signal or a post-filtered signal based on the comparing of the decision variable to the threshold.

Embodiment 26. The decoder (100) of Embodiment 25, wherein the decoder (100) is adapted to perform operations according to any of Embodiments 2-12.

Embodiment 27. A computer program comprising program code to be executed by processing circuitry (1001) of a decoder (100), whereby execution of the program code causes the decoder (100) to perform operations comprising: obtaining (1101, 800) an energy estimation of at least a part of a frequency spectrum of a primary signal being reconstructed by the decoder to form a decoded primary signal; obtaining (1103, 820) an analysis of discontinuities in time domain that is caused by post-filtering of the decoded primary signal; generating (1105, 830) a decision variable based on the energy estimation obtained and the analysis of discontinuities obtained; comparing (1107, 850) the decision variable to a threshold; and setting (1109) the output signal to be the primary signal decoded or a post-filtered signal based on the comparing of the decision variable to the threshold.

Embodiment 28. The computer program of Embodiment 27 comprising further program code, whereby execution of the program code causes the decoder (100) to perform operations according to any of Embodiments 2-12.

Embodiment 29. A computer program product comprising a non-transitory storage medium including program code to be executed by processing circuitry (1001) of a decoder (100), whereby execution of the program code causes the decoder (100) to perform operations comprising: obtaining (1101, 800) an energy estimation of at least a part of a frequency spectrum of a primary signal being reconstructed by the decoder; obtaining (1103, 820) an analysis of discontinuities in time domain that is caused by post-filtering of the primary signal; generating (1105, 830) a decision variable based on the energy estimation obtained and the analysis of discontinuities obtained; comparing (1107, 850) the decision variable to a threshold; and setting (1109) the output signal to be the primary signal decoded or the post-filtered signal based on the comparing of the decision variable to the threshold.

Embodiment 30. The computer program product of Embodiment 29 wherein the non-transitory storage medium includes further program code, whereby execution of the further program code causes the decoder (100) to perform operations according to any of Embodiments 2-12.

Explanations are provided below for various abbreviations/acronyms used in the present disclosure.

| Abbreviation | Explanation |
| --- | --- |
| BPF | Bass Post-Filter |
| DFT | Discrete Fourier Transform |
| MDCT | Modified Discrete Cosine Transform |
| EVS | Enhanced Voice Service |
| QMF | Quadrature Mirror Filterbank |

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

**Claims**

1.  A method for audio decoding, where an encoded signal is decoded to form a decoded signal, the method comprising:

    obtaining an energy estimate of at least a part of a frequency spectrum of the decoded signal;
    generating a post-filter difference signal $s_{diff}$ that describes the difference between a post-filtered decoded signal and a non-filtered decoded signal in time domain;
    measuring size of discontinuities by averaging the step at subframe boundaries of the post-filter difference signal $s_{diff}$;
    forming a decision variable based on a ratio between average energy of the step at the subframe boundaries and the energy estimate;
    comparing the decision variable to a threshold; and
    as a result of the comparison deciding whether to set an output signal to be the decoded signal or the post-filtered signal.

2.  The method of claim 1, wherein obtaining the energy estimate comprises summing energy coefficients of the at least a part of the frequency spectrum.

3.  The method of claim 2, wherein obtaining the energy estimate comprises measuring an energy of a critical band of the decoded signal in accordance with

$$E_{\hat{S}_{cb}}(m) = \frac{1}{k_{end} - k_{start} + 1} \sum_{k=k_{start}}^{k_{end}} \left( \hat{S}(m,k) \right)^2$$

wherein $m$ is a frame number, $\tilde{E}_{\hat{S}_{cb}}(m)$ is an energy of a critical band of the decoded signal, $\hat{S}(m, k)$ is the frequency spectrum of the decoded signal, and frequency bin limits $k_{start}$ and $k_{end}$ are set to match a frequency range of a critical band.

4.  The method of claim 3, further comprising applying a low-pass filter to the energy $E_{\hat{S}_{cb}}(m)$ of the critical band of the decoded signal in accordance with

$$\tilde{E}_{\hat{S}_{cb}}(m) = \gamma E_{\hat{S}_{cb}}(m) + (1 - \gamma)E_{\hat{S}_{cb}}(m - 1)$$

wherein $\gamma \in (0,1]$ and is a low-pass filtering coefficient.

5.  The method of any of claims 1-4, wherein measuring size of the discontinuities at the subframe boundaries comprises measuring an average energy of a size of the discontinuities.

6.  The method of claim 5, wherein measuring the average energy of the size of the discontinuities comprises averaging a step at subframe boundaries of the post-filter difference signal $s_{diff}(m, n)$ in accordance with

$$\tilde{E}_{step}(m) = \frac{1}{N_{sf}} \sum_{i=1}^{N_{sf}} \left( s_{diff}(m, n_i) - s_{diff}(m, n_i - 1) \right)^2$$

wherein $m$ is a frame number, $i$ is a subframe number, $\tilde{E}_{step}(m)$ is an average energy of the step at the subframe boundaries, $N_{sf}$ is a number of subframes and $n_1, n_2, ..., n_{N_{sf}}$ are sample indices of the subframe boundaries marking the start of each subframe.

7. The method of any of claims 1-6, wherein forming the decision variable comprises limiting the decision variable to a maximum value.

8. The method of any of claims 1-7 further comprising low-pass filtering the decision variable.

9. The method of claim 8, wherein forming the decision variable comprises generating the decision variable $\tilde{E}_{ratio,LP}(m)$ in accordance with

$$\tilde{E}_{ratio}(m) = \frac{\tilde{E}_{step}(m)}{\tilde{E}_{\hat{S}_{cb}}(m)}$$

$$\tilde{E}_{ratio,LP}(m) = \beta\tilde{E}_{ratio,1}(m) + (1-\beta)\tilde{E}_{ratio,LP}(m-1)$$

$$\tilde{E}_{ratio,1}(m) = \begin{cases} \tilde{E}_{ratio}(m), & \tilde{E}_{ratio}(m) \leq E_{ratio,lim} \\ E_{ratio,lim}, & \tilde{E}_{ratio}(m) > E_{ratio,lim} \end{cases}$$

wherein $m$ is a frame number, $\tilde{E}_{ratio}(m)$ is an energy ratio between $\tilde{E}_{step}(m)$ and $\tilde{E}_{\hat{S}_{cb}}(m)$, $\tilde{E}_{step}(m)$ is an average energy of a step at subframe boundaries, $\tilde{E}_{\hat{S}_{cb}}(m)$ is a low-pass filtered energy $E_{\hat{S}_{cb}}(m)$ of a critical band of a decoded signal, $\beta \in (0,1]$ is a low-pass filtering coefficient, and $E_{ratio,lim}$ is an upper limit for the energy ratio.

10. The method of any of claims 1-10, wherein setting the output signal to be the decoded signal or the post-filtered signal based on the comparing of the decision variable to the threshold comprises: responsive to the ratio between the size of discontinuities and the energy estimate being less than a threshold, setting the output signal to the post-filtered signal; and responsive to the energy ratio between the size of discontinuities and the energy estimate being equal to the threshold or higher than the threshold, setting the output signal to the decoded signal.

11. A decoder (100) for audio decoding, where an encoded signal is decoded to form a decoded, the decoder being adapted to:

obtain an energy estimate of at least a part of a frequency spectrum of the decoded signal;
generate a post-filter difference signal $s_{diff}$ that describes the difference between a post-filtered decoded signal and a non-filtered decoded signal in time domain;
measure size of discontinuities by averaging the step at subframe boundaries of the post-filter difference signal $s_{diff}$;
form a decision variable based on a ratio between average energy of the step at the subframe boundaries and the energy estimate;
compare the decision variable to a threshold; and
decide, as a result of the comparison, whether to set an output signal to be the decoded signal or the post-filtered signal.

12. The decoder of claim 11, wherein the decoder is adapted to perform the method according to any of claims 2-10.

13. A computer program, comprising instructions which, when executed on at least one processor, cause the at least one processor to carry out the method according to any one of claims 1-10.

**Figure 1**

**Figure 2**

Figure 3

**Figure 4**

EP 4 478 357 A1

**Figure 5**

Figure 6

EP 4 478 357 A1

Figure 7

```
┌─────────────────────────────────────────────────────────┐
│     MEASURE ENERGY IN CRITICAL BAND IN FREQUENCY DOMAIN   │
│                          800                              │
└─────────────────────────────────────────────────────────┘
                            │
                            ▼
┌ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│             LOW PASS FILTER MEASURED ENERGY               │
│                          810                              │
└ ─ ─ ─ ─ ─ ─ ─ ─ ─ ─ ─ ─ ─ ─ ─ ─ ─ ─ ─ ─ ─ ─ ─ ─ ─ ─ ─ ─ ┘
                            │
                            ▼
┌─────────────────────────────────────────────────────────┐
│     MEASURE ENERGY OF STEPS AT SUBFRAME BOUNDARIES OF THE │
│                POST-FILTER DIFFERENCE SIGNAL              │
│                          820                              │
└─────────────────────────────────────────────────────────┘
                            │
                            ▼
┌─────────────────────────────────────────────────────────┐
│                   FORM DECISION VARIABLE                  │
│                          830                              │
└─────────────────────────────────────────────────────────┘
                            │
                            ▼
┌ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│              LOW PASS FILTER THE DECISION VARIABLE        │
│                             OR                            │
│    LIMIT THE DECISION VARIABLE USING AN UPPER LIMIT       │
│           THRESHOLD AND LOW PASS FILTER                   │
│                          840                              │
└ ─ ─ ─ ─ ─ ─ ─ ─ ─ ─ ─ ─ ─ ─ ─ ─ ─ ─ ─ ─ ─ ─ ─ ─ ─ ─ ─ ─ ┘
                            │
                            ▼
┌─────────────────────────────────────────────────────────┐
│           COMPARE THE DECISION VARIABLE TO THRESHOLD      │
│                          850                              │
└─────────────────────────────────────────────────────────┘
                            │
                            ▼
┌─────────────────────────────────────────────────────────┐
│          DECIDE WHETHER OR NOT TO USE POST-FILTER         │
│                          860                              │
└─────────────────────────────────────────────────────────┘
```

**Figure 8**

ALTERNATIVE ADAPTIVE POST-FILTER BLOCK

900

INPUT SIGNAL
IN MDCT
DOMAIN

620

650

PF
ADAPTOR
640

902

IMDCT → PF

904

ADAPTIVE
FILTER OUTPUT
SIGNAL

660

PITCH PERIOD

EP 4 478 357 A1

**Figure 9**

Decoder
100

Network
Interface
1005

Processor
1001

Memory
1003

Figure 10

Obtaining an energy estimation of at least a part
of a frequency spectrum of a primary signal
being decoded by the decoder
1101

Obtaining an analysis of discontinuities in time
domain that is caused by post-filtering of the
decoded primary signal
1103

Generating a decision variable based on the
energy estimation obtained and the analysis of
discontinuities obtained
1105

Comparing the decision variable to a threshold
1107

Setting the output signal to be the decoded
primary signal or the post-filtered signal based
on the comparing of the decision variable to the
threshold
1109

Figure 11

```
┌─────────────────────────────────────────────────────────────┐
│        Limiting the decision variable to a maximum value      │
│                            1201                               │
└─────────────────────────────────────────────────────────────┘
                              │
                              ▼
┌─────────────────────────────────────────────────────────────┐
│              Low pass filtering the decision variable         │
│                            1203                               │
└─────────────────────────────────────────────────────────────┘
```

Figure 12

```
                        ╱╲
                       ╱  ╲
                      ╱Energy╲
           No        ╱ ratio  ╲
    ┌──────────────── <         ────
    │               ╲threshold?╱
    │                ╲  1301  ╱
    │                 ╲      ╱
    │                  ╲    ╱
    │                   ╲  ╱
    │                    ╲╱
    │                     │ Yes
    │                     ▼
    │  ┌──────────────────────────────────────────────────┐
    │  │  Setting the output signal to the post-filtered signal │
    │  │                      1303                          │
    │  └──────────────────────────────────────────────────┘
    │                     │
    └─────────────────────┤
                          ▼
       ┌──────────────────────────────────────────────────┐
       │ Setting the output signal to the decoded primary signal │
       │                      1305                          │
       └──────────────────────────────────────────────────┘
```

Figure 13

Europäisches
Patentamt

European
Patent Office

Office européen
des brevets

## EUROPEAN SEARCH REPORT

Application Number

EP 24 20 1242

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/214035 A1 (RESCH BARBARA [SE] ET AL) 11 July 2019 (2019-07-11) * paragraphs [0007], [0021], [0023], [0024], [0028] - [0034] * ----- | 1-13 | INV. G10L19/26 G10L25/51 |
| A | US 2012/101824 A1 (CHEN JUIN-HWEY [US]) 26 April 2012 (2012-04-26) * paragraphs [0015], [0090] * ----- | 1-13 | |

**TECHNICAL FIELDS SEARCHED      (IPC)**

G10L

The present search report has been drawn up for all claims

| Place of search | Date of completion of the search | Examiner |
|---|---|---|
| The Hague | 6 November 2024 | Taddei, Hervé |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 1242

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2024

| Patent document cited in search report | Publication date | Patent family member(s) | | Publication date |
|---|---|---|---|---|
| US 2019214035 A1 | 11-07-2019 | AU | 2011273680 A1 | 20-12-2012 |
| | | CA | 2801805 A1 | 05-01-2012 |
| | | CA | 2928180 A1 | 05-01-2012 |
| | | CA | 2929090 A1 | 05-01-2012 |
| | | CA | 2937672 A1 | 05-01-2012 |
| | | CA | 2958350 A1 | 05-01-2012 |
| | | CA | 2958360 A1 | 05-01-2012 |
| | | CA | 2976485 A1 | 05-01-2012 |
| | | CA | 2976490 A1 | 05-01-2012 |
| | | CA | 3025108 A1 | 05-01-2012 |
| | | CA | 3093517 A1 | 05-01-2012 |
| | | CA | 3124114 A1 | 05-01-2012 |
| | | CA | 3160488 A1 | 05-01-2012 |
| | | CA | 3207181 A1 | 05-01-2012 |
| | | CA | 3239015 A1 | 05-01-2012 |
| | | CN | 103098129 A | 08-05-2013 |
| | | CN | 105244035 A | 13-01-2016 |
| | | CN | 105261370 A | 20-01-2016 |
| | | CN | 105261371 A | 20-01-2016 |
| | | CN | 105261372 A | 20-01-2016 |
| | | CN | 105355209 A | 24-02-2016 |
| | | CN | 105390140 A | 09-03-2016 |
| | | DK | 3079152 T3 | 13-08-2018 |
| | | DK | 3079153 T3 | 05-11-2018 |
| | | EP | 2589046 A1 | 08-05-2013 |
| | | EP | 2757560 A1 | 23-07-2014 |
| | | EP | 3079152 A1 | 12-10-2016 |
| | | EP | 3079153 A1 | 12-10-2016 |
| | | EP | 3079154 A1 | 12-10-2016 |
| | | EP | 3422346 A1 | 02-01-2019 |
| | | EP | 3605534 A1 | 05-02-2020 |
| | | EP | 3971893 A1 | 23-03-2022 |
| | | EP | 4407615 A2 | 31-07-2024 |
| | | ES | 2484794 T3 | 12-08-2014 |
| | | ES | 2666150 T3 | 03-05-2018 |
| | | ES | 2683647 T3 | 27-09-2018 |
| | | ES | 2683648 T3 | 27-09-2018 |
| | | ES | 2691934 T3 | 29-11-2018 |
| | | ES | 2902392 T3 | 28-03-2022 |
| | | ES | 2984913 T3 | 31-10-2024 |
| | | HK | 1183965 A1 | 10-01-2014 |
| | | HK | 1199135 A1 | 19-06-2015 |
| | | HK | 1218462 A1 | 17-02-2017 |
| | | HK | 1218803 A1 | 10-03-2017 |
| | | HK | 1218987 A1 | 17-03-2017 |
| | | HK | 1219168 A1 | 24-03-2017 |

EPO FORM P0459

For more details about this annex : see Official Journal of the European Patent Office, No. 12/82

page 1 of 3

## ANNEX TO THE EUROPEAN SEARCH REPORT
## ON EUROPEAN PATENT APPLICATION NO.

EP 24 20 1242

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2024

| Patent document cited in search report | Publication date | Patent family member(s) | | Publication date |
|---|---|---|---|---|
| | | HK | 1220036 A1 | 21-04-2017 |
| | | HK | 1221326 A1 | 26-05-2017 |
| | | HU | E038985 T2 | 28-12-2018 |
| | | HU | E039862 T2 | 28-02-2019 |
| | | IL | 223319 A | 21-04-2016 |
| | | IL | 243958 A | 30-11-2016 |
| | | IL | 245591 A | 29-12-2016 |
| | | IL | 265661 A | 30-05-2019 |
| | | IL | 278805 A | 31-01-2021 |
| | | IL | 286405 A | 31-10-2021 |
| | | IL | 295473 A | 01-10-2022 |
| | | IL | 302557 A | 01-07-2023 |
| | | IL | 311020 A | 01-04-2024 |
| | | JP | 6178236 B2 | 09-08-2017 |
| | | JP | 6258257 B2 | 10-01-2018 |
| | | JP | 6279686 B2 | 14-02-2018 |
| | | JP | 6556815 B2 | 07-08-2019 |
| | | JP | 6679433 B2 | 15-04-2020 |
| | | JP | 6682683 B2 | 15-04-2020 |
| | | JP | 6812585 B2 | 13-01-2021 |
| | | JP | 6944038 B2 | 06-10-2021 |
| | | JP | 7073565 B2 | 23-05-2022 |
| | | JP | 7147090 B2 | 04-10-2022 |
| | | JP | 7319441 B2 | 01-08-2023 |
| | | JP | 2013533983 A | 29-08-2013 |
| | | JP | 2015158689 A | 03-09-2015 |
| | | JP | 2016186652 A | 27-10-2016 |
| | | JP | 2016194711 A | 17-11-2016 |
| | | JP | 2017037328 A | 16-02-2017 |
| | | JP | 2018045252 A | 22-03-2018 |
| | | JP | 2019204102 A | 28-11-2019 |
| | | JP | 2020109529 A | 16-07-2020 |
| | | JP | 2021060601 A | 15-04-2021 |
| | | JP | 2021192121 A | 16-12-2021 |
| | | JP | 2022106963 A | 20-07-2022 |
| | | JP | 2022177215 A | 30-11-2022 |
| | | JP | 2023134779 A | 27-09-2023 |
| | | KR | 20130019004 A | 25-02-2013 |
| | | KR | 20140056394 A | 09-05-2014 |
| | | KR | 20160075869 A | 29-06-2016 |
| | | KR | 20160081986 A | 08-07-2016 |
| | | KR | 20160086426 A | 19-07-2016 |
| | | KR | 20190044692 A | 30-04-2019 |
| | | KR | 20190116541 A | 14-10-2019 |
| | | KR | 20200018720 A | 19-02-2020 |
| | | KR | 20210040184 A | 12-04-2021 |

EPO FORM P0459

For more details about this annex : see Official Journal of the European Patent Office, No. 12/82

page 2 of 3

## ANNEX TO THE EUROPEAN SEARCH REPORT
## ON EUROPEAN PATENT APPLICATION NO.

EP 24 20 1242

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2024

| Patent document cited in search report | Publication date | Patent family member(s) | | Publication date |
|---|---|---|---|---|
| | | KR | 20210107923 A | 01-09-2021 |
| | | KR | 20220053032 A | 28-04-2022 |
| | | KR | 20230018539 A | 07-02-2023 |
| | | MY | 176187 A | 24-07-2020 |
| | | MY | 176188 A | 24-07-2020 |
| | | MY | 176192 A | 24-07-2020 |
| | | MY | 183707 A | 09-03-2021 |
| | | PL | 3079152 T3 | 31-10-2018 |
| | | PL | 3079153 T3 | 31-12-2018 |
| | | RU | 2599338 C1 | 10-10-2016 |
| | | RU | 2616774 C1 | 18-04-2017 |
| | | RU | 2707716 C1 | 28-11-2019 |
| | | RU | 2013102794 A | 10-08-2014 |
| | | RU | 2015117332 A | 27-11-2016 |
| | | RU | 2016117277 A | 13-11-2017 |
| | | RU | 2019135620 A | 06-05-2021 |
| | | SG | 186209 A1 | 30-01-2013 |
| | | SG | 10201503004W A | 29-06-2015 |
| | | SG | 10201604866V A | 30-08-2016 |
| | | SG | 10201604880Y A | 30-08-2016 |
| | | SG | 10201605650W A | 30-08-2016 |
| | | SG | 10201901308T A | 28-03-2019 |
| | | SG | 10202005270Y A | 29-07-2020 |
| | | US | 2013096912 A1 | 18-04-2013 |
| | | US | 2016086616 A1 | 24-03-2016 |
| | | US | 2016093312 A1 | 31-03-2016 |
| | | US | 2016118057 A1 | 28-04-2016 |
| | | US | 2016163326 A1 | 09-06-2016 |
| | | US | 2016210980 A1 | 21-07-2016 |
| | | US | 2016225381 A1 | 04-08-2016 |
| | | US | 2016225384 A1 | 04-08-2016 |
| | | US | 2016240209 A1 | 18-08-2016 |
| | | US | 2018047405 A1 | 15-02-2018 |
| | | US | 2019214035 A1 | 11-07-2019 |
| | | US | 2021035592 A1 | 04-02-2021 |
| | | US | 2022157327 A1 | 19-05-2022 |
| | | US | 2023282222 A1 | 07-09-2023 |
| | | US | 2024274145 A1 | 15-08-2024 |
| | | WO | 2012000882 A1 | 05-01-2012 |
| US 2012101824 A1 | 26-04-2012 | NONE | | |

EPO FORM P0459

For more details about this annex : see Official Journal of the European Patent Office, No. 12/82

page 3 of 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9224403 B

- US 9224403 B2

**Non-patent literature cited in the description**

- **H. CHIBA et al.** Adaptive Post-Filtering Controlled by Pitch Frequency for CELP-based Speech Coder. *48th Asilomar Conference on Signals, Systems and Computers,* 2014